# EUROPÄISCHE PATENTSCHRIFT

(11) **EP 2 602 086 B1**
(45) Veröffentlichungstag und Bekanntmachung des Hinweises auf die Patenterteilung: **07.02.2018**
(21) Anmeldenummer: 12195766.6
(22) Anmeldetag: 05.12.2012
(51) Int. Cl.: B29C 47/12, B29C 47/04, B29C 47/70, B29C 47/02, B29C 44/24

(54) **Verfahren zur Herstellung eines Kunststoffhohlprofils mit wenigstens einer mit einem Schaumkörper versehenen Hohlkammer sowie ein Extrusionswerkzeug dafür**
Method for producing a plastic hollow profile with at least one hollow chamber with a foamed body and an extrusion tool therefor
Procédé de fabrication d'un profil creux en matière synthétique avec au moins une chambre creuse pourvue d'un corps expansé et outil d'extrusion prévu à cet effet

(30) Priorität: 08.12.2011 DE 102011056194
(43) Veröffentlichungstag der Anmeldung: 12.06.2013
(73) Patentinhaber: Veka AG, 48324 Sendenhorst (DE)
(72) Erfinder: Bäumker, Manfred, 48231 Warendorf (DE)
(74) Vertreter: Tarvenkorn, Oliver

(56) Entgegenhaltungen:
- EP-A1- 2 062 717
- FR-A- 1 471 485
- FR-A- 1 541 608
- JP-A- 50 146 663
- JP-A- 51 144 466
- JP-A- S49 118 766
- JP-A- 2000 263 624
- JP-A- 2004 351 782
- US-A- 4 249 875

## Beschreibung

Die Erfindung betrifft ein Verfahren zum Herstellen eines Kunststoffhohlprofils mit wenigstens einer mit einem Schaumkörper versehenen Hohlkammer sowie ein Extrusionswerkzeug dafür.
Solche Profile werden insbesondere für den Fenster- und Türenbau eingesetzt. Um den Wärmedurchgang von der warmen Gebäudeinnenseite zur kalten Gebäudeaußenseite zu reduzieren, ist es bekannt, Schaumstoffprofile aus einem geschlossenzelligen Kunststoff separat herzustellen, wobei die Querschnittsform der Querschnittsform der Hohlkammer des Profils entspricht. Die Schaumstoffprofilstangen werden in die abgelängten Kunststoffhohlprofile eingeschoben. Hierfür sind jedoch zwei Verarbeitungslinien erforderlich, zudem muss dann bei der Konfektionierung noch das Ineinanderfügen der beiden Profile vorgenommen werden. Durch die Verdrängung der in der Hohlkammer enthaltenen Luft wird der Wärmetransport gebremst.

Als Schaumkunststoff zu Isolierungszwecken ist unter anderem LDPE bekannt. Schaumstoffe auf Basis thermoplastischer Kunststoffe wie Polyethylen werden mit physikalischen und/oder chemischen Treibverfahren hergestellt, wie beispielsweise in der DE 101 38 587 A1 oder der EP 1 625 174 A1 offenbart. Zu den physikalischen Verfahren gehören u.a. die Expansion von dem Polymeren zugesetzten komprimierten Gasen und das Verdampfen leicht flüchtiger Flüssigkeiten. Bei den chemischen Verfahren entstehen die Gase erst bei der Schaumbildung durch (thermischen) Zerfall von zugesetzten Blähmitteln. Das Gas muss anschließend, um eine gleichmäßige Schaumstruktur zu erhalten, in der gesamten viskosen Polymermasse gleichmäßig verteilt und unter Druck im Extruder oder in der Form in der Schmelze bzw. im viskoelastischen Zustand gelöst werden. Wenn die Schmelze den Extruder durch die Düse verlässt oder die Schmelztemperatur in der Form überschritten ist, kommt es zum Druckabfall; das Gas trennt sich von der Schmelze und expandiert, was zur Bildung einer zellulären Struktur im Kunststoff führt.

Je nach Verfahrensbedingungen hinsichtlich der Temperatur und der Extrusionsgeschwindigkeit werden mehr oder weniger große Bläschen erhalten. Dementsprechend enthält ein so hergestellter Kunststoffschaum dicht gepackte, geschlossene, gasgefüllte Zellen, wobei das in den Zellen eingeschlossene Gas im allgemeinen Luft und/oder Reste des Treibmittels sind. Die ausgezeichneten Isoliereigenschaften der Kunststoffschäume beruhen im Wesentlichen auf den dicht gepackten, geschlossenen und gasgefüllten Zellen, die gewissermaßen eine "immobile" Gas-Schicht, insbesondere Luft-Schicht bilden. Eine solche feststehende Luftschicht besitzt eine geringe Wärmeleitfähigkeit. Aus der DE 199 61 306 der Anmelderin ist ein Verfahren zur Inline-Ausschäumung einer Hohlkammer eines extrudierten Kunststoff-Hohlprofils bekannt, bei dem ein Gemisch aus reaktiven Komponenten zur Herstellung eines PUR-Schaums in eine der Hohlkammern eingebracht wird. Hierzu ist durch die Formdüse des Extruders ein Zulaufrohr bis in die Hohlkammer des extrudierten Profils geführt. Durch die stangenförmige Ausbildung des Zulaufrohrs wird der Abgabepunkt der reaktiven Komponenten in dem noch heißen Profil weiter nach vorne verlagert, wo das Profil aus Hart-Kunststoff wiederum bereits eine gewisse Abkühlung und dadurch eine höhere Formstabilität erhalten hat. Das reaktive Gemisch soll dann innerhalb der Hohlkammer aufquellen und diese vollständig ausfüllen. Nachteilig bei dem bekannten Verfahren ist es, dass gesundheitsgefährdende und brennbare Komponenten verwendet werden müssen, noch dazu in unmittelbarer Umgebung der Kunststoffverarbeitungsanlage, in welcher der thermoplastische Kunststoff auf eine Temperatur von 200° aufgeschmolzen wird. Es müssen daher erhebliche Sicherheitsvorkehrungen getroffen werden, um Brände zu verhindern. Weiterhin muss verhindert werden, dass nicht vollständig reagierte Anteile der Komponenten aus dem Hohlprofil abfließen können und die Umgebung verunreinigen können. Die Druckschriften EP 2 062 717 A1 und JP S49 118766 A offenbaren weitere Verfahren und Vorrichtungenzum Herstellen eines Kunststoffhohlprofils mit wenigstens einer mit einem Schaumkörper versehenen Hohlkammer. Aufgabe der vorliegenden Erfindung ist es somit, ein Verfahren zum Herstellen eines Kunststoffhohlprofils mit wenigstens einer mit einem Schaumkörper versehenen Hohlkammer und ein geeignetes Extrusionswerkzeug zur Durchführung des Verfahrens anzugeben, um direkt bei der Herstellung des Hohlprofils durch Extrusion in wenigstens einer der Hohlkammern einen Schaumkörper zu erzeugen.

Diese Aufgabe wird durch ein Verfahren mit den Merkmalen des Anspruchs 1 gelöst. Ein geeignetes Extrusionswerkzeug wird in Anspruch 7 angegeben.

"Schaumkunststoff" bezeichnet im Sinne der Erfindung einen thermoplastischen Kunststoff, der mit Zusatzstoffen versetzt sein kann, und zwar in seiner unexpandierten Grundform, die beispielsweise als Pulver oder Granulat geliefert wird.

"Schaumkunststoff" oder "Schaumkörper" bezeichnet den aus dem Schaumkunststoff hergestellten, expandierten Profilstrang mit sehr geringem spezifischen Gewicht.

Die Wahl eines Coextrusionsverfahrens für das Fertigen des Schaumkörpers hat den Vorteil, dass dadurch der Schaumkörper nahezu zeitgleich und direkt innerhalb des eigentlichen Profils gefertigt wird. Der Verbund kann als ein einheitliches Profil abgezogen und gekühlt werden. Es sind insbesondere nicht zwei separate Fertigungsanlagen notwendig und es ist auch keine manuelle oder maschinelle Nacharbeit notwendig, um nachträglich abgelängte Profile ineinander zu fügen.

Durch die Coextrusion eines thermoplastischen Kunststoffes wird zudem im Vergleich zur Inline-Ausschäumung mit reaktiven Komponenten zur Bildung eines PolyurethanSchaums eine Brand- oder Explosionsgefahr vermieden.

Erfindungswesentlich ist, dass die Zufuhr der Schmelze zur Ausbildung des Schaumstoffes durch den Coextruder mit dem Abzug des Profilkörpers aus massivem Kunststoff synchronisiert wird. Um den Wärmeleitwert herabzusetzen ist es erforderlich, den Schaumkunststoff auf mindestens 2000%, besser 2500 % gegenüber der vom Coextruder ursprünglich abgegebenen Menge an Schaumkunststoff expandieren zu lassen, und dabei zugleich dem Schaumkunststoff die Möglichkeit zu geben, ausreichend zu expandieren, ohne dass es zu Abrissen des Schaumstoffstrangs oder Einschnürungen oder spiralförmigen Verwindungen kommt.

Das Coextrudat wird erfindungsgemäß insbesondere durch einen Zwischenkanal im Haupt-Formwerkzeug zu dem für die auszufüllende Hohlkammer vorgesehenen Querschnittsbereich geführt. Erfindungsgemäß tritt es dort aber nicht direkt zwischen den aus der Formdüse austretenden Kunststoffstrang aus beispielsweise Hart-PVC, sondern es wird durch einen Düsenfortsatz in Form eines Zusatzwerkzeugs ein Stück nach vorne, in Abzugsrichtung gesehen, geleitet und tritt erst dort in die Hohlkammer ein.

Eine Weglänge L1 > 0 zwischen den Düsenöffnungen für das Hauptprofil und den Austrittsöffnungen des Schaumkunststoffs kann günstig sein, um eine erste Abkühlung des Profilkörpers zu bewirken und dadurch die Formstabilität beim Eingeben des Schaumstoffs zu erhöhen.

Insbesondere dient das Zusatzwerkzeug aber dazu, eine Schäumkammer bereitzustellen, die eine schlagartige Expansion des Schaumstoffs mit anschließender Beschleunigung auf die Abzugsgeschwindigkeit des umgebenden massiven Profils ermöglicht.

Es hat sich gezeigt, dass die Eingabe des Coextrudats durch eine einfache Düsenöffnung nur zur Bildung eines Strangs innerhalb der Hohlkammer führen würde, der kaum größer als der Querschnitt der Düsenbohrung wäre. Ein solcher Strang würde im Laufe des weiteren Abzugs des Profils nur unwesentlich expandieren und die Hohlkammer nicht ausfüllen.

Gemäß der Erfindung ist daher vorgesehen, den Zufluss des Coextrudats auf mehrere Zuleitungspunkte innerhalb des Hohlkammer-Querschnitts zu verteilen und das Coextrudat durch eine feine Zwischendüsenplatte zu pressen, an welche sich die sogenannte Schäumkammer anschließt.

Aufgrund der Druckbeaufschlagung des Coextrudats an der Düsenplatte bei gleichzeitig hoher Temperatur, welche durch das direkt oder indirekt über das Hauptwerkzeug beheizte Zusatzwerkzeug vorgegeben wird, wird das Schäummittel innerhalb des Coextrudats aktiviert und es kommt zur schlagartigen Expansion der einzelnen aus der Zwischendüsenplatte tretenden Stränge. Mit zunehmender Aufquellung vereinigen sich die Stränge wieder zu einer Schaummasse, was dadurch erreicht wird, dass ihr weiterer Austritt abermals abgebremst wird, bevor sie in die Hohlkammer des Profils gelangen.

Die Schäumkammer besitzt eine bestimmte Länge und einen bestimmten Öffnungswinkel, der auf die Abzugsgeschwindigkeit des Hauptprofils abgestimmt ist.

Wesentlich ist dabei, dass die Schäumkammer nach vorn hin, in Abzugsrichtung, zumindest über einen Teil ihrer Länge einen sich verjüngenden Querschnitt aufweist. Durch die Querschnittsverjüngung wird die im Aufquellvorgang begriffenen Schaumportion ein weiteres Mal angehalten und gebremst, sodass sich die von hinten nachschiebenden Einzelstränge, welche aus der Zwischendüsenplatte austreten, sicher vereinigen können.

Die weiterhin quellende Masse wird durch die konische Schäumkammer nach vorn geschoben, verlässt die im Querschnitt reduzierte Austrittsöffnung der Schäumkammer und strömt in die Hohlkammer des Profils ein, wo der Schaum abermals expandiert und sich dann abschließend aufgrund der Abkühlung des umgebenden Hohlprofils verfestigt.

Während der Hauptextruder in an sich bekannter Weise in seinem inneren Hohlraum vollständig mit Granulat oder Pulver gefüllt wird und bei diesem durch die außen liegenden Heizbänder eine möglichst frühzeitige und gleichmäßige Aufschmelzung des Kunststoffs erreicht werden soll, besteht hinsichtlich des Coextruders das Problem, dass die einzuziehende Masse an Schaumkunststoff im nicht expandierten Zustand außerordentlich klein ist, was durch das angestrebte Expansionsverhältnis von mindestens 2000% bedingt ist.

Selbst Coextruder von sehr kleiner Baugröße sind bei üblichen Hohlkammerquerschnitten nicht geeignet, wenn sie als Einschneckenextruder ausgelegt sind, da diese nicht in der Lage sind, nur sehr kleine Massenportionen des Coextrudats einzuziehen, aufzuschmelzen und in das Zusatzwerkzeug zu pressen.

Erfindungsgemäß ist daher für die Förderung des Schaumkunststoffs in das Zusatzwerkzeug eine Einrichtung mit einer Zwangsförderung vorgesehen, insbesondere ein Doppelschneckenextruder. Alternativ kann auch eine Zahnradpumpe eingesetzt werden.

Die Wahl von LDPE als einem bevorzugten Schaumkunststoff hat den Vorteil, dass es sich um ein chemisch weitgehend neutrales Polyolefin handelt, das als solches nur eine äußerst geringe adhäsive Wirkung besitzt. Selbst bei einer durch die Vernetzungsmittel und Schäummittel etwas erhöhten Adhäsion besteht allenfalls eine geringe Anhaftung des inline extrudierten Schaumköpers an den umgebenden Wänden des Hohlprofils ohne stoffschlüssige Verbindung, so dass der Schaumkörper beim späteren Recycling problemlos entfernt werden kann. Die Aufschäumung des Kunststoffs ist an sich aus dem Stand der Technik bekannt, beispielsweise aus der DE19531631A1, deren Offenbarung hinsichtlich der Ausrüstung des Kunststoffs hiermit in Bezug genommen wird.

Weitere vorteilhafte Ausgestaltungen der Erfindung sind den Unteransprüchen sowie der nachfolgenden Beschreibung zu entnehmen.

Die Erfindung wird nachfolgend mit Bezug auf die Zeichnung näher erläutert. Die Figuren zeigen im Einzelnen:
- Fig. 1: eine Extrusionsanlage zur Durchführung des Verfahrens in schematischer seitlicher Ansicht und
- Fig. 2: ein Extrusionswerkzeug zur Durchführung des Verfahrens.

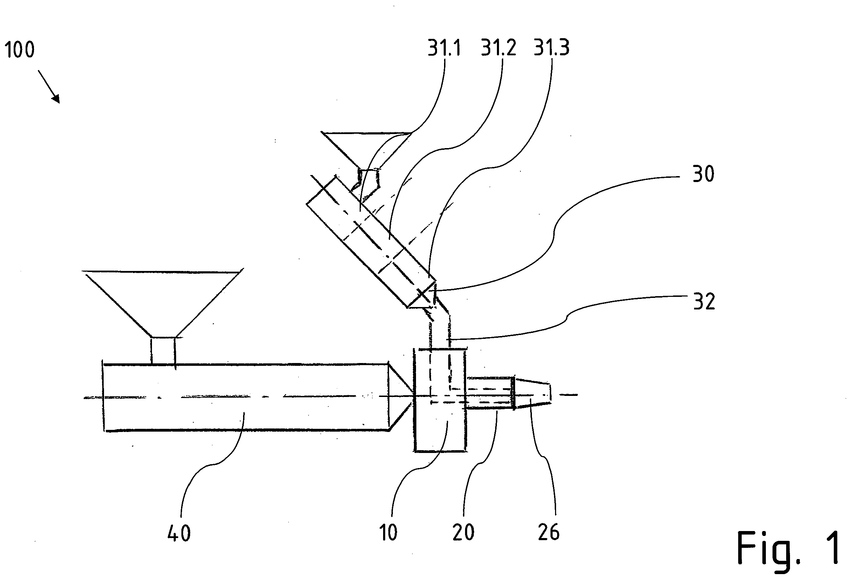

Fig. 1 zeigt eine Extrusionsanlage 100, bestehend aus einem ersten Extruder 40, einem Formwerkzeug 10 mit einem Aufsatzwerkzeug 20 und einem Coextruder 30.

Wie an sich bekannt, wird im Hauptextruder 40 ein thermoplastischer Kunststoff wie insbesondere Hart-PVC in Pulver- oder Granulatform aufgeschmolzen und über die beiden im Extruder 40 enthaltenden Schnecken durch eine Düsenöffnung im Formwerkzeug 10 gepresst, welche die Kontur des aus massivem Kunststoff bestehenden Kunststoffhohlprofils vorgibt. Ein Coextruder 30 ist seitlich oder oben an das Formwerkzeug 10 angesetzt, um den Schaumkunststoff durch das Formwerkzeug 10 hindurch in das Zusatzwerkzeug 20 zu pressen.

Vorzugsweise ist der Coextruder 30 mit seiner Mündung direkt, ohne beheizte Zusatzleitungen, an das Hauptwerkzeug 10 angeschlossen.

Wie in Fig. 1 angedeutet, besitzt der Coextruder 30 mehrere Heizzonen 31.1, 31.2, 31.3. Während bei herkömmlicher Betriebsweise alle Heizzonen so eingestellt werden, dass eine frühzeitige und gleichmäßige Aufschmelzung des Kunststoff im Ausgangszustand bewirkt wird, ist erfindungsgemäß bevorzugt vorgesehen, nur die in Förderrichtung vorne liegenden Zonen, also im dargestellten Ausführungsbeispiel nur die Zone 31.3, auf eine Temperatur oberhalb des Schmelzpunkts des Schaumkunststoffes zu erhitzen.

Die davor liegenden Zonen 31.1, 31.2 werden nur mit einer Temperatur von beispielsweise etwa 50°C beheizt, sofern als Schaumkunststoff LDPE eingesetzt wird, sodass die Vicat-Erweichungstemperatur noch nicht überschritten wird.

Erst gegen Ende der Länge der beiden Schnecken im Coextruder 30 erfolgt dann eine Aufschmelzung und Förderung der Schmelze zum Zusatzwerkzeug 20 hin.

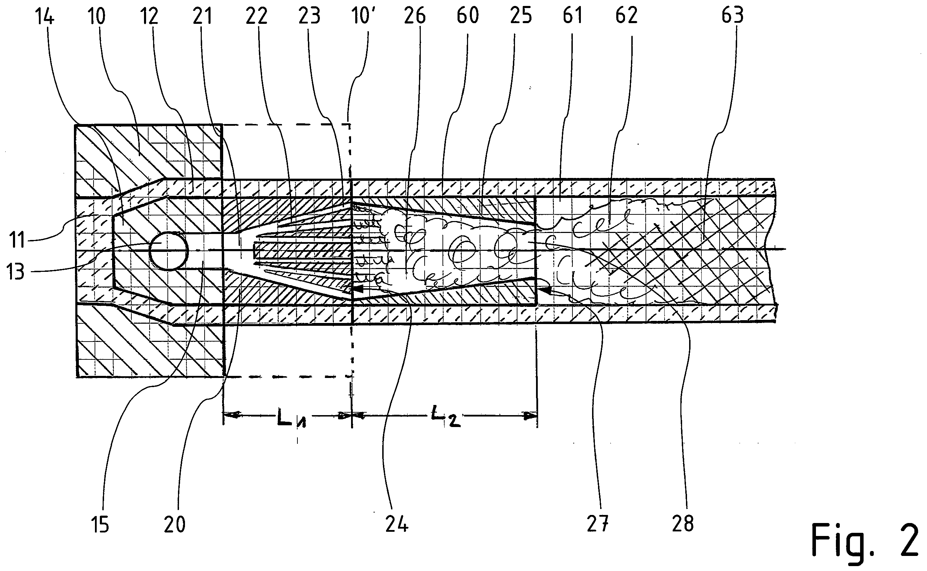

Das erfindungsgemäße Verfahren wird nachfolgend mit Bezug auf die Fig. 2 näher erläutert:
Fig. 2 zeigt den Bereich des Formwerkzeugs 10 am Austritt des Schmelzestrangs mit dem Zusatzwerkzeug 20.

Im Hauptextruder 40 wird PVC-Granulat aufgeschmolzen und in die Eintrittsöffnung 11 des Formwerkzeugs 10 gepresst. Der Schmelzestrang wird in verschiedene Teilkanäle verzweigt, die jeweils Außenwände oder einzelne Stege innerhalb des Hohlprofils bilden.

Die Ansicht in Fig. 2 ist schematisch gehalten, sodass der Schmelzestrang vom Eintrittskanal 11 aus nur nach oben und unten sowie in beiden seitlichen Richtungen verzweigt wird, wodurch ein Rechteckprofil erhalten wird.

Ein Kern 14 im Hauptwerkzeug 10 drängt die Schmelze nach außen, sodass es dahinter zur Ausbildung einer Hohlkammer kommt. In den Teilbereich 14 wird an einer Öffnung 13 das Coextrudat eingeleitet und gelangt durch eine Austrittsöffnung 15 in das Zusatzwerkzeug 20. Im dargestellten Ausführungsbeispiel ist das Zusatzwerkzeug 20 vollständig vor die Abschlussfläche des Formwerkzeugs 10 gesetzt.

Die mit 10' bezeichnete Konturlinie deutet an, dass das Formwerkzeug 10 das Zusatzwerkzeug 20, welches auf die Querschnittsfläche der aufzuschäumenden Hohlkammer gesetzt ist, zumindest teilweise aufnehmen kann. Die Länge L1 gibt an, wie weit die Außenfläche 27 des Zusatzwerkzeugs 20 aus dem Hauptwerkzeug 10 heraus ragt. Die Länge L1 kann insbesondere zwischen 10 und 50 mm variiert werden, um zusammen mit der Länge L2 = 20 mm bis 150 mm der vorne liegenden Schäumkammer 26 den Abgabepunkt des expandierenden Schaums in die Hohlkammer 61 des extrudierten Profils 60 zu verändern.

Das über die Zuleitung 13, 15 eingeführte Coextrudat wird also in das Zusatzwerkzeug 20 eingeleitet, fächert dort in einzelne Teilkanäle 22 auf und tritt an Düsenöffnungen 23 an einer Stirnfläche 24 wieder aus. Bedingt durch das hohe Strömungshindernis, dass durch die Teilkanäle 22 und die Düsenöffnungen 23 gebildet wird, wird der Schaumkunststoff stark mit Druck beaufschlagt, zugleich wird die Fließgeschwindigkeit erhöht. Dies sind die erfindungswesentlichen Faktoren, die dazu führen, dass ein befriedigendes Treibverhalten innerhalb des Schaumkunststoffs erreicht wird. Aufgrund der vorherigen Druckbeaufschlagung expandiert der Schaum, sobald er aus den Düsenöffnungen 23 in die Schäumkammer 25 des vorderen Aufsatzteils 25 des Zusatzwerkzeugs eintritt. Die höhere Fließgeschwindigkeit führt dazu, dass der Schaumkunststoff partiell schneller fließt in Bezug auf die axiale Abzugsrichtung als das extrudierte Profil 60. Der geringe Zeitgewinn ermöglicht eine kurze Verweilzeit der Schaumportion innerhalb der Schäumkammer 26, innerhalb der Schaumkunststoff weiter aufquellen kann. Die konische Form der Schäumkammer 26 führt dazu, dass die aus den einzelnen Düsen 23 austretenden Stränge des Schaumkunststoffs wieder vereinigt werden und dass abermals eine Beschleunigung und Kompression der Masse erreicht wird.

Nach dem Austritt des weiterhin quellenden Schaumstrangs aus der Austrittsöffnung 28 an der Stirnseite 27 kann der Schaum wieder expandieren und die Bewegung des Schaumstrangs wird aufgrund der zumindest partiellen Haftung des Schaumkunststoffs an den Innenwänden des außen liegenden Hohlprofils 60 auf die Abzugsgeschwindigkeit des Hohlprofils beschleunigt.

Wie durch die Schraffuren angedeutet, tritt der Schaumkunststoff zunächst noch in Form einer weichen Schaumstoffportion 62 aus der Öffnung 28 aus, bevor er sich dann durch weitere Abkühlung zunehmend zu einem festen Schaumstoffkörper 63 verfestigt, der den gesamten Querschnitt der Hohlkammer 61 im Hohlprofil 60 abdeckt.

## Patentansprüche

1. Verfahren zum Herstellen eines Kunststoffhohlprofils (60) mit wenigstens einer mit einem Schaumkörper (63) versehenen Hohlkammer (61) mit wenigstens folgenden Verfahrensschritten:
- Aufschmelzen eines ersten thermoplastischen Werkstoffs in einem Hauptextruder (10) und Zuführen der Schmelze zur Düsenöffnung (12) eines Hauptwerkzeugs (10) zur Ausbildung des Kunststoffhohlprofils (60);
- Aufschmelzen eines zweiten thermoplastischen Kunststoffs, der schäumbar ist, in einem Coextruder (30) und Zuführen der Schmelze zu einem Zusatzwerkzeug(20) zur Ausbildung des Schaumkörpers (63);
- Austritt des aufschäumenden zweiten Kunststoffs in die Hohlkammer (61);
- Kühlung und Kalibrierung des extrudierten Kunststoffhohlprofils (60);
**dadurch gekennzeichnet,**
- **dass** die Schmelze des zweiten Kunststoffs vor dem Austritt in die Hohlkammer (61) im Zusatzwerkzeug (20) unter Druck an einer Zwischendüsenplatte mit mehreren Teilkanälen (22) aufgefächert wird, die sich jeweils bis zu einer Düsenöffnung (23) erstrecken,
- **dass** die Schmelze über die Düsenöffnungen (23), die über den Querschnitt der auszufüllenden Hohlkammer (61) verteilt sind, in eine Schäumkammer (26) geführt wird, die sich in Abzugsrichtung des Kunststoffhohlprofils (60) über eine Länge L2 innerhalb der bereits ausgeformten Hohlkammer (61) des Kunststoffhohlprofils (60) erstreckt und die einen sich verjüngenden Querschnitt aufweist,
- **dass** in der Schäumkammer (26) eine schlagartige Expansion der einzelnen aus der Zwischendüsenplatte tretenden Stränge der Schmelze erfolgt;
- **dass** die einzelnen Stränge in der Schäumkammer (26) durch eine konische Form der Schäumkammer (26) wieder zu einer Schaummasse, vereinigt werden;
- und **dass** der aufschäumende zweite Kunststoff durch die gegenüber der Hohlkammer (61) im Querschnitt reduzierte Austrittsöffnung der Schäumkammer (26) in die Hohlkammer (61) austritt und darin expandiert.

2. Verfahren nach Anspruch 1, **dadurch gekennzeichnet, dass** der Coextruder (30) über eine Schmelzepumpe an das Zusatzwerkzeug (20) angeschlossen ist.

3. Verfahren nach Anspruch 1 oder 2, **dadurch gekennzeichnet, dass** der Coextruder (30) ein Doppelschneckenextruder ist.

4. Verfahren nach Anspruch 3, **dadurch gekennzeichnet, dass** der Coextruder (30) direkt an das Hauptwerkzeug (10) angeschlossen ist und die vom Coextruder (30) abgegebene Schmelze über einen Zwischenkanal (12, 13) im Hauptwerkzeug (10) in das Zusatzwerkzeug (20) eintritt.

5. Verfahren nach Anspruch 3 oder 4, **dadurch gekennzeichnet, dass** im Coextruder (30) nur die der Ausgangsöffnung zugewandte(n) Endzone(n) (31.3, 31.2) bis über die Schmelztemperatur des Schaumkunststoffs beheizt wird (werden).

6. Verfahren nach einem der Ansprüche 1 bis 5, **dadurch gekennzeichnet, dass** der erste thermoplastische Werkstoff ein Hart-PVC ist.

7. Verfahren nach einem der Ansprüche 1 bis 6, **dadurch gekennzeichnet, dass** der schäumbare zweite Kunststoff ein Low-Density-Polyethylen (LDPE) ist.

8. Extrusionswerkzeug zum Herstellen eines Kunststoffhohlprofils (60) mit wenigstens einer mit einem Schaumkörper (63) versehenen Hohlkammer (61), wenigstens umfassend:
- ein Hauptwerkzeug (10) mit wenigstens einem Eintrittskanal (11) zur Verbindung mit einem Hauptextruder (40), von der aus sich wenigstens ein Fließkanal (12) bis zu wenigstens einer Düsenöffnung zur Ausbildung des Kunststoffhohlprofils (60) erstreckt sowie
- je auszufüllender Hohlkammer (61) ein Zusatzwerkzeug (20) zur Ausbildung eines thermoplastischen Schaumstoffstrangs (63), das innerhalb des zur Ausbildung der Hohlkammer (61) im Hauptwerkzeug (10) vorgesehenen Querschnitts angeordnet ist,
**dadurch gekennzeichnet,**
- **dass** das Zusatzwerkzeug (20) einen Eintrittskanal (21) aufweist, der sich an einer Zwischendüsenplatte zur Auffächerung in mehrere Teilkanäle (22) verzweigt, die sich jeweils bis zu einer Düsenöffnung (23) erstrecken, und das wenigstens eine sich an die Düsenöffnungen (23) anschließende Schäumkammer (26) aufweist, welches sich über eine Länge L2 erstreckt und welche in Abzugsrichtung zumindest über einen Teil ihrer Länge einen sich verjüngenden Querschnitt aufweist und
- und **dass** eine Austrittsöffnung der der Schäumkammer (26) gegenüber der sich anschließenden Hohlkammer (61) im Querschnitt reduziert ist.

9. Extrusionswerkzeug (10) nach Anspruch 8, **dadurch gekennzeichnet, dass** zwischen den Düsenöffnungen (12) für das Kunststoffhohlprofil (60) im Hauptwerkzeug (10) und den Austrittsöffnungen (23) des Schaumkunststoffs eine Länge L1 = 10mm ... 50 mm vorgesehen ist.

10. Extrusionswerkzeug (10) nach Anspruch 8 oder 9, **dadurch gekennzeichnet, dass** das Zusatzwerkzeug wenigstens zweiteilig ausgebildet ist, wobei ein erstes Teilelement einen Einlaufkanal (21) und den Schmelzeverteiler zur Auffächerung in einzelne Teilkanäle (22) sowie die in einer Stirnfläche (24) mündenden Düsenöffnungen (23) umfasst und ein zweites Teilelement (25) die Schäumkammer (26) enthält.

11. Extrusionswerkzeug (10) nach einem der Ansprüche 8 bis 10, **dadurch gekennzeichnet, dass** die Schäumkammer (26) konisch zuläuft mit einem Konuswinkel α von 10° bis 35° bei einer Länge L2 der Schäumkammer von 20 mm bis 150 mmm.

## Claims

1. Method for producing a plastic hollow profile (60) with at least one hollow chamber (61) provided with a foamed body (63), with at least the following method steps:
- melting a first thermoplastic material in a main extruder (10) and feeding the melt to the die opening (12) of a main die (10) for forming the plastic hollow profile (60);
- melting a second thermoplastic polymer, which is expandable, in a coextruder (30) and feeding the melt to an additional die (20) for forming the foamed body (63);
- discharging the expanding second polymer into the hollow chamber (61);
- cooling and calibrating the extruded plastic hollow profile (60);
**characterized**
- **in that**, before being discharged into the hollow chamber (61), the melt of the second polymer is fanned out in the additional die (20) under pressure at an intermediate die plate with multiple part-channels (22), which respectively extend up to a die opening (23),
- **in that** the melt is conducted via the die openings (23), which are distributed over the cross section of the hollow chamber (61) to be filled, into a foaming chamber (62), which extends in the take-off direction of the plastic hollow profile (60) over a length L2 within the already formed hollow chamber (61) of the plastic hollow profile (60) and has a narrowing cross section,
- **in that** an abrupt expansion of the individual strands of the melt emerging from the intermediate die plate takes place in the foaming chamber (26);
- **in that** the individual strands are reunited in the foaming chamber (26) by a conical form of the foaming chamber (26) to form a foam compound;
- and **in that** the expanding second polymer is discharged through the discharge opening of the foaming chamber (26), which is reduced in cross section in comparison with the hollow chamber (61), into the hollow chamber (61) and expands therein.

2. Method according to Claim 1, **characterized in that** the coextruder (30) is connected to the additional die (20) by way of a melt pump.

3. Method according to Claim 1 or 2, **characterized in that** the coextruder (30) is a twin-screw extruder.

4. Method according to Claim 3, **characterized in that** the coextruder (30) is connected directly to the main die (10) and the melt delivered by the coextruder (30) enters the additional die (20) via an intermediate channel (12, 13) in the main die (10).

5. Method according to Claim 3 or 4, **characterized in that** in the coextruder (30) only the end zone(s) (31.3, 31.2) facing the outlet opening is (are) heated to beyond the melting temperature of the foam plastic.

6. Method according to one of Claims 1 to 5, **characterized in that** the first thermoplastic material is an unplasticized PVC.

7. Method according to one of Claims 1 to 6, **characterized in that** the expandable second polymer is a low-density polyethylene (LDPE).

8. Extrusion die for producing a plastic hollow profile (60) with at least one hollow chamber (61) provided with a foamed body (63), at least comprising:
- a main die (10) with at least one entry channel (11) for connection to a main extruder (40), from which at least one flow channel (12) extends up to at least one die opening for the forming of the plastic hollow profile (60), and
- depending on the hollow chamber (61) to be filled, an additional die (20) for forming a thermoplastic foam strand (63), which is arranged within the cross section provided for forming the hollow chamber (61) in the main die (10),
**characterized**
- **in that** the additional die (20) has an entry channel (21), which branches at an intermediate die plate for fanning out into multiple part-channels (22), which respectively extend up to a die opening (23), and which has at least one foaming chamber (26), which adjoins the die openings (23), extends over a length L2 and has a narrowing cross section in the take-off direction, at least over part of its length, and
- **in that** a discharge opening of the of the foaming chamber (26) is reduced in cross section in comparison with the adjoining hollow chamber (61).

9. Extrusion die (10) according to Claim 8, **characterized in that** a length L1 = 10 mm ... 50 mm is provided between the die openings (12) for the plastic hollow profile (60) in the main die (10) and the discharge openings (23) of the foam plastic.

10. Extrusion die (10) according to Claim 8 or 9, **characterized in that** the additional die is formed as at least two parts, a first part-element comprising an inflow channel (21) and the melt manifold for the fanning out into individual part-channels (22) and also the die openings (23) opening out in an end face (24), and a second part-element (25) including the foaming chamber (26).

11. Extrusion die (10) according to one of Claims 8 to 10, **characterized in that** the foaming chamber (26) narrows conically with a cone angle α of 10° to 35° in the case of a length L2 of the foaming chamber of 20 mm to 150 mmm.

## Revendications

1. Procédé de fabrication d'un profilé creux (60) en matière synthétique présentant au moins une cavité (61) dotée d'un corps (63) en mousse, le procédé présentant au moins les étapes suivantes :
fusion d'un premier matériau thermoplastique dans une extrudeuse principale (10) et amenée de la matière fondue vers une ouverture de tuyère (12) d'un outil principal (10) en vue de former le profilé creux (60) en matière synthétique,
fusion dans une co-extrudeuse (30) d'une deuxième matière synthétique thermoplastique apte à être moussée et amenée de la matière fondue vers un outil supplémentaire (20) en vue de former le corps moussé (63),
sortie dans la cavité (61) de la deuxième matière synthétique en train de mousser et
refroidissement et calibration du profilé creux (60) en matière synthétique qui a été extrudé,
**caractérisé en ce que**
avant sa sortie dans la cavité (61), la matière fondue de la deuxième matière synthétique est répartie en éventail sous pression dans l'outil supplémentaire (20), sur une plaque à tuyères intermédiaires présentant plusieurs canaux partiels (22) qui s'étendent jusqu'à une ouverture de tuyère (23),
**en ce que** par les ouvertures de tuyère (23) réparties sur la section transversale de la cavité (61) à remplir, la matière fondue est amenée dans une chambre de moussage (26) qui s'étend sur une longueur L2 dans la direction d'extraction du profilé creux (60) en matière synthétique à l'intérieur de la cavité (61) déjà formée du profilé creux (60) en matière synthétique et qui présente une section transversale se rétrécissant,
**en ce que** dans la chambre de moussage (26) a lieu une dilatation brutale des différents brins de matière fondue qui sortent de la plaque à tuyères intermédiaires,
**en ce que** grâce à la forme conique de la chambre de moussage (26), les différents brins sont réunis de nouveau en une pâte de mousse dans la chambre de moussage (26) et
**en ce que** la deuxième matière synthétique en train de mousser sort dans la cavité (61) et s'y dilate par l'ouverture de sortie de la chambre de moussage (26) dont la section transversale est plus petite que celle de la cavité (61).

2. Procédé selon la revendication 1, **caractérisé en ce que** la co-extrudeuse (30) est raccordée à l'outil supplémentaire (20) par une pompe à matière fondue.

3. Procédé selon les revendications 1 ou 2, **caractérisé en ce que** la co-extrudeuse (30) est une extrudeuse à double vis.

4. Procédé selon la revendication 3, **caractérisé en ce que** la co-extrudeuse (30) est raccordée directement à l'outil principal (10) et **en ce que** la matière en fusion délivrée par la co-extrudeuse (30) pénètre dans l'outil supplémentaire (20) par l'intermédiaire d'un canal intermédiaire (12, 13) prévu dans l'outil principal (10).

5. Procédé selon les revendications 3 ou 4, **caractérisé en ce que** dans la co-extrudeuse (30), seules la ou les zones terminales (31.3, 31.2) tournées vers l'ouverture de sortie sont chauffées jusqu'à la température de fusion de la matière synthétique moussée.

6. Procédé selon l'une des revendications 1 à 5, **caractérisé en ce que** la première matière synthétique thermoplastique est un PVC dur.

7. Procédé selon l'une des revendications 1 à 6, **caractérisé en ce que** la deuxième matière synthétique apte à mousser est un polyéthylène à basse densité (LDPE).

8. Outil d'extrusion destiné à fabriquer un profilé creux (60) en matière synthétique présentant au moins une cavité (61) dotée d'un corps moussé (63), l'outil présentant au moins :
un outil principal (10) qui présente au moins un canal d'entrée (11) destiné à être relié à une extrudeuse principale (40) de laquelle part au moins un canal d'écoulement (12) conduisant à au moins une ouverture de tuyère servant à former le profilé creux (60) en matière synthétique,
pour chaque cavité (61) à remplir, un outil supplémentaire (20) qui forme un brin (63) de matière thermoplastique moussée disposé à l'intérieur de la section transversale prévue dans l'outil principal (10) pour former la cavité (61),
**caractérisé en ce que**
l'outil supplémentaire (20) présente un canal d'entrée (21) qui se ramifie en éventail en plusieurs canaux partiels (22) sur une plaque supplémentaire à tuyères, les canaux partiels s'étendant jusqu'à une ouverture de tuyère (23), l'outil supplémentaire présentant au moins une chambre de moussage (26) qui se raccorde aux ouvertures de tuyère (23), qui s'étend sur une longueur L2 et qui présente une section transversale qui se rétrécit au moins sur une partie de sa longueur dans la direction d'extraction et
**en ce que** la section transversale de l'ouverture de sortie de la de la chambre de moussage (26) est plus petite que celle de la cavité (61) qui s'y raccorde.

9. Outil d'extrusion (10) selon la revendication 8, **caractérisé en ce qu'**une longueur L1 = 10 mm... 50 mm est prévue entre les ouvertures de tuyères (12) prévues dans l'outil principal (10) pour le profilé creux (60) en matière synthétique et les ouvertures de sortie (23) prévues pour la matière synthétique en mousse.

10. Outil d'extrusion (10) selon les revendications 8 ou 9, **caractérisé en ce que** l'outil supplémentaire est réalisé en au moins deux parties, un premier élément partiel contenant un canal d'entrée (21) et le répartiteur de matière fondue qui se divise en plusieurs canaux partiels (22) ainsi que les ouvertures de tuyère (23) qui débouchent dans une surface frontale (24) et **en ce qu'**un deuxième élément partiel (25) contient la chambre de moussage (26).

11. Outil d'extrusion (10) selon l'une des revendications 8 à 10, **caractérisé en ce que** la chambre de moussage (26) s'étend en cône sous un angle α de 10° à 35° sur une longueur L2 de la chambre de moussage de 20 mm à 150 mmm.
